# EUROPEAN PATENT SPECIFICATION

(11) **EP 0 439 146 B1**
(45) Date of publication and mention of the grant of the patent: **05.08.1998**
(21) Application number: 91100833.2
(22) Date of filing: 23.01.1991
(51) Int. Cl.: G02F 1/135, B41J 2/445, G02B 26/10, B41J 2/525

(54) **Image forming device and two-dimensional optical scanning device**
Bilderzeugungsvorrichtung und zweidimensionale optische Abtastvorrichtung
Dispositif de génération d'images et dispositif optique de balayage bi-dimensionnel

(30) Priority: 25.01.1990 JP 15304/90; 25.01.1990 JP 15305/90; 25.01.1990 JP 15306/90; 25.01.1990 JP 15307/90; 25.01.1990 JP 15308/90; 25.01.1990 JP 15309/90; 29.01.1990 JP 18214/90; 29.01.1990 JP 18216/90; 31.01.1990 JP 20615/90; 08.02.1990 JP 29225/90; 08.02.1990 JP 29226/90; 19.10.1990 JP 281532/90
(43) Date of publication of application: 31.07.1991
(73) Proprietor: SEIKO EPSON CORPORATION, Shinjuku-ku Tokyo-to (JP)
(72) Inventor: Sonehara , Tomio, c/o Seiko Epson Corporation, Suwa-shi, Nagano-ken (JP); Kobayashi, Hidekazu, c/o Seiko Epson Corporation, Suwa-shi, Nagano-ken (JP)
(74) Representative: Hoffmann, Eckart, Dipl.-Ing.

(56) References cited:
- EP-A- 385 346
- US-A- 4 733 307
- PATENT ABSTRACTS OF JAPAN, vol. 9, no. 86 (P-349)[1809], 16th April 1985; & JP-A-59 216 126 (CANON K.K.) 06-12-1984
- IEEE TRANSACTIONS ON ELECTRON DEVICES, vol. 36, no. 12, December 1989, pages 2959-2964, IEEE, New York, US; W. LI et al.: "Hydrogenated amorphous-silicon photosensor for optically addressed high-speed spatial light modulator"
- PATENT ABSTRACTS OF JAPAN, vol. 12, no. 354 (P-761)[3201], 22nd September 1988; & JP-A-63 108 323 (SEIKO EPSON CORP.) 13-05-1988
- PATENT ABSTRACTS OF JAPAN, vol. 12, no. 453 (P-792)[3300], 29th November 1988; & JP-A-63 175 828 (NEC CORP.) 20-07-1988

## Description

This invention relates to an image forming device as defined in the pre-characterizing portion of claim 1.

Such an image forming device is disclosed in US-A-4,707,077. The purpose of this known image forming device is to form an image representing the difference between two input images. To achieve this goal two input images are simultaneously projected through a Ronchi grating to the photoconductive medium of the light valve means. The Ronchi grating applies a coding function to the input images which causes the actual image subtraction to occur. A voltage applied to the electrodes is such as to cause the electrooptic medium (liquid crystal) to assume a first optical state when the photoconductive medium is in a "dark" or "off" state and to assume a different state in accordance with the optical modulation when the images are projected.

JP-A-63-108323 discloses an image forming device wherein a laser scanning device is used to expose a light valve to a single input image. The input image is read out from the light valve by means of a read-out light beam.

A conventional image forming devices is also disclosed in JP-A-216126/1984 using thermoplastic as a medium to be modulated. As reported in SID 87 DIGEST p.367 (1987) and SID 85 DIGEST p.260 (1985), an image formed by a light valve employing a smectic A (hereinafter abbreviated to SmA) liquid crystal is recorded on photosensitive paper or other material.

The present invention aims at irradiating photoconductive material with the light beams for image input providing more sophisticated functions of a display and a printer, etc.

This object is achieved with an image forming device as claimed in claim 1. Preferred embodiments of the invention are subject matter of the dependent claims.

The present invention will hereinafter be described in detail by way of embodiments and with reference to drawings in which:
- Fig. 1: is a block diagram illustrating the basic structure of an image forming device embodying the present invention;
- Fig. 2: is a sectional view depicting a light valve;
- Fig. 3: is a time chart showing a sequence when recording an image;
- Fig. 4: is a diagram illustrating a driving waveform of a positive pulse alone and another driving waveform of a negative pulse alone;
- Fig. 5: is a conceptual diagram showing a logic operation of a two-dimensional image;
- Fig. 6: is a diagram showing a driving waveform of the logic operation of the two-dimensional image;
- Fig. 7: is a characteristic diagram of the operation of the PALV;
- Figs. 8: (a) through (d) are diagrams of examples of logic operations on a complicated two-dimensional image on the basis of sequential operations, Figs. 8 (a) and 8 (b) showing a logic "A AND (NOT B)", and Figs. 8 (c) and 8 (d) showing an Exclusive OR (EX.OR); and
- Fig. 9: is a chart showing an operating principle of a color image forming device.

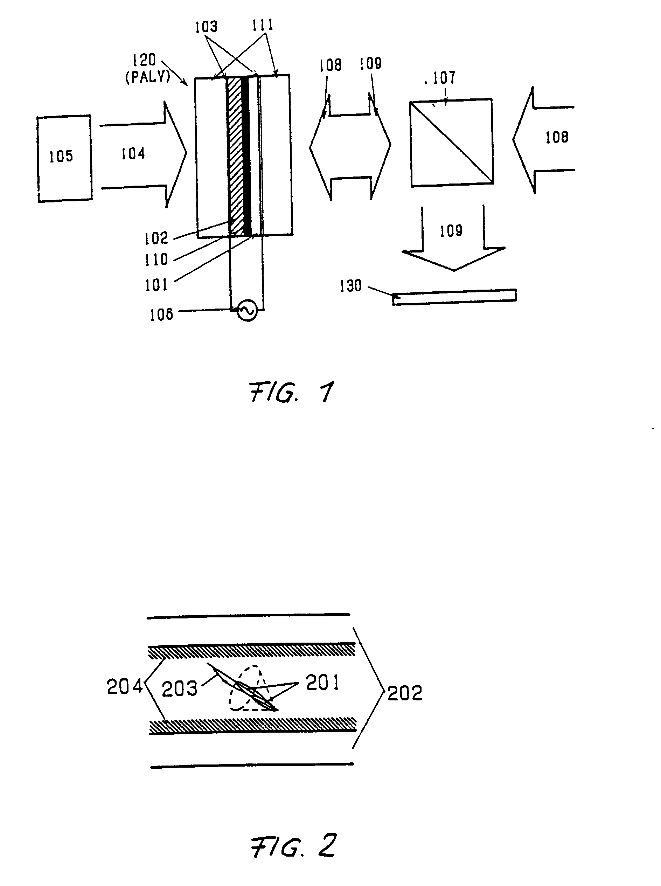

Fig. 1 is a block diagram illustrating the basic structure of the image forming device. The numeral 120 designates an electro-optic effect light valve (hereinafter referred to as PALV). A chiral-smectic C liquid crystal 101 (hereinafter referred to as an SmC*liquid crystal) is defined as an electro-optic medium having a bistability. The bistable states of the SmC* liquid crystal 101 are controlled by an electric field applied between electrodes 103 through a photoconductive material 102. The electric field is applied to the transparent electrodes 103 from a recording electric field applying means 106. Designated at 104 is an image beam inputted to the photoconductive material from image inputting means 105. The numeral 107 represents a polarization beam splitter (hereinafter abbreviated to PBS) constituting a means for reading a recorded image. The PBS 107 separates a read-out beam 108 from an image beam 109. A photosensitive medium 130 is irradiated with the image beam 109, thereby effecting a recording process. In this embodiment, a PALV image is formed on the photosensitive medium by use of a projection optical system. A printer and a hard copy device are thus actualized. The photosensitive medium involves the use of materials reported in SID 87 DIGEST p.367 (1987). Other available materials are mediums and dry silver paper mentioned in SID 85 DIGEST p. 260 (1985). If a screen is disposed in place of the photosensitive medium, a display unit is provided. Indicated at 110 is a read-out beam blocking means for preventing the photoconductive material from undergoing an influence from the read-out beam. The numerals 111 denote transparent substrates. Table 1 shows further details of this embodiment.

**Table 1**

| | |
|---|---|
| Image inputting means | Image forming projection of image beam or two-dimensional scanning of laser beam |
| Recording electric field applying means | Pulse generator |
| Image reading means | He-Ne laser beam, PBS |
| PALV: Photoconductive material | High-resistance a-Si containing trace quantity B (by plasma CVD method |
| Bistable medium | SmC* liquid crystal (CS-1015 made by Chisso Corporation) SiO₂ oblique vapor deposition alignment, approximately 2µm in thickness |
| Electrode | ITO transparent electrode |
| Read-out beam blocking means | Dielectric mirror (multilayer film of Si, SiO₂) |
| Substrate | Corning 7059 glass substrate |
| Photosensitive medium | Cycolor recording paper (Cycolor is a trademark of Mead Co.) |

An oblique vapor deposition film is used as an alignment film. Liquid crystal molecules are thereby oriented at approximately 30° inclined to the substrate surface. In this embodiment, deposition is effected from a direction tilted at 85° to the normal of the substrate. As a result, when using the liquid crystal molecules having a positive refractive index anisotropy (Δn), apparent Δnd is reduced (d is the thickness of the liquid crystal layer). For this reason, the thickness d can be increased to optimize the contrast with an increment of the apparent Δnd. Namely, the liquid crystal layer can be increased in thickness. Hence, in the case of employing a conventional organic high polymer orientation film, an optimum condition is developed when d= 1µm or thereabouts. Whereas in the present invention, the optimum condition can be found out when d=2µm or thereabouts. As can be observed from a sectional view of a light valve in Fig. 2 liquid crystal molecules 201 are tilted. Therefore, when the read-out beam is incident on a substrate 202 from a vertical direction, an apparent director tilt angel Θm (larger than a true tilt angle 203) becomes large. This enhances the brightness and contrast as well. A way of combining the two substrates is demonstrated by Fig. 2, wherein deposition directions of deposition films 204 need reversely paralleled to each other. The deposition films 204 need not necessarily be provided on both of the two substrates. Other materials of the oblique vapor deposition film exhibit the same function if they are insulating substances which can be deposited.

In this embodiment, the temperature of the liquid crystal layer is constantly controlled to keep the response time and the alignment property.

Usable optical scanning systems for image input are disclosed in, for instance, JP-A-13461/1984 and "Optics" Vol.10 (1981), the 56th issue, p.348.

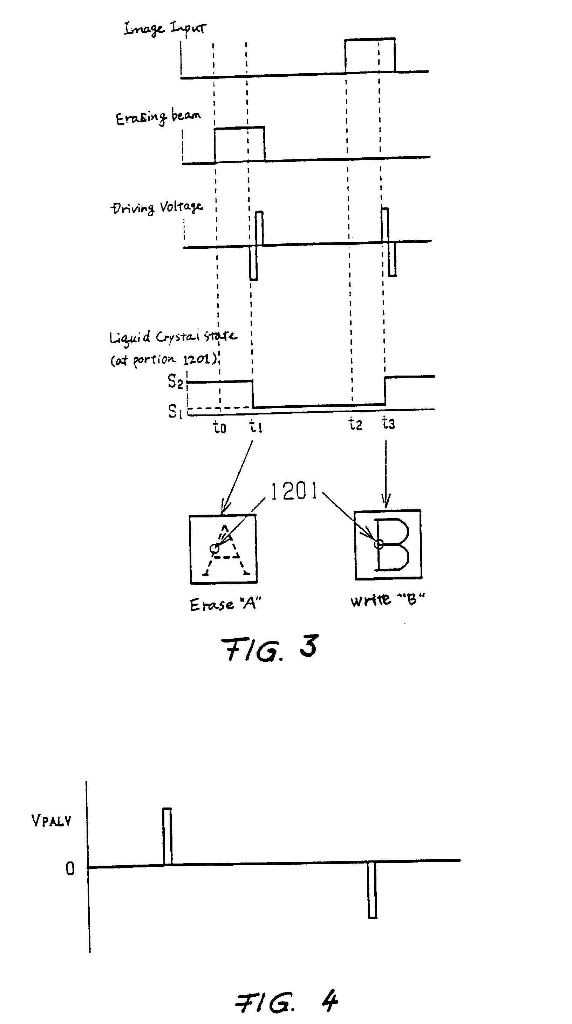

The following description deals with an arrangement in which two-dimensional optical image recording is effected on the PALV having the constitution shown in the Table. The image forming device is constructed of the PALV, a means for reading the image and an image inputting means such as an ordinary image forming optical system. Fig. 3 is a time chart showing a sequence when recording the image. Fig. 3 shows an image input, an erasing beam input, a driving voltage and a status of a recording device sequentially from the top. The entire photoconductive area is irradiated with the erasing beam to initialize the recording device.

A series of operations executed at respective timings will be described. In Fig. 3, the numeral 1201 indicates positions in which a state of liquid crystal changes. The erasing beam is emitted at a timing t₀. A pulse voltage is supplied at a timing t₁, whereby one stable state S₁ of the SmC* liquid crystal is developed. A letter "A", which has been written, is now erased. The S₁ state is thereafter held till the recording process is initiated. The operation then moves to the recording process. An input image beam is given at a timing t₂. A driving voltage pulse assuming a phase opposite to that at t₁ is given at a timing t₃. At this time, the SmC* liquid crystal of a beam-irradiated portion of the input image "B" transits to a stable state S₂ reverse to S₁. This is an image recording status. So far as the input beam and the driving voltage are not applied thereafter, this image recording status is held. A static driving waveform of the typical SmC* liquid crystal herein serves as a write pulse. However, any kind of pulse capable of switching the bistable state is usable. For instance, the operation is practicable by only positive pulses or negative pulses.

Besides, the partial erasing and writing processes can be done. More specifically, a portion to be erased is irradiated with the erasing beam and the driving pulse for developing the S₁ state is merely given. The previous recording status is held in other portions with no erasing beam. Partial writing is, after finishing the partial erasing process, performed by giving the driving pulse for developing the S₂ state as well as by emitting the writing image beam.

The processes described above can be considered by applying to the electronic circuit. Namely, it is presumed that the two-dimensional image information is conceived as an input signal, and the recording electric field signal is a clock and reset signal. Based on this presumption, the same operation as that of a flip-flop with respect to the two-dimensional information signal can be carried out.

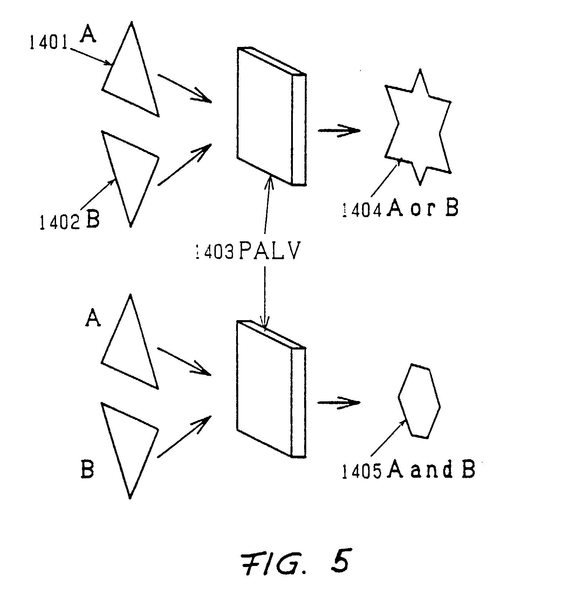

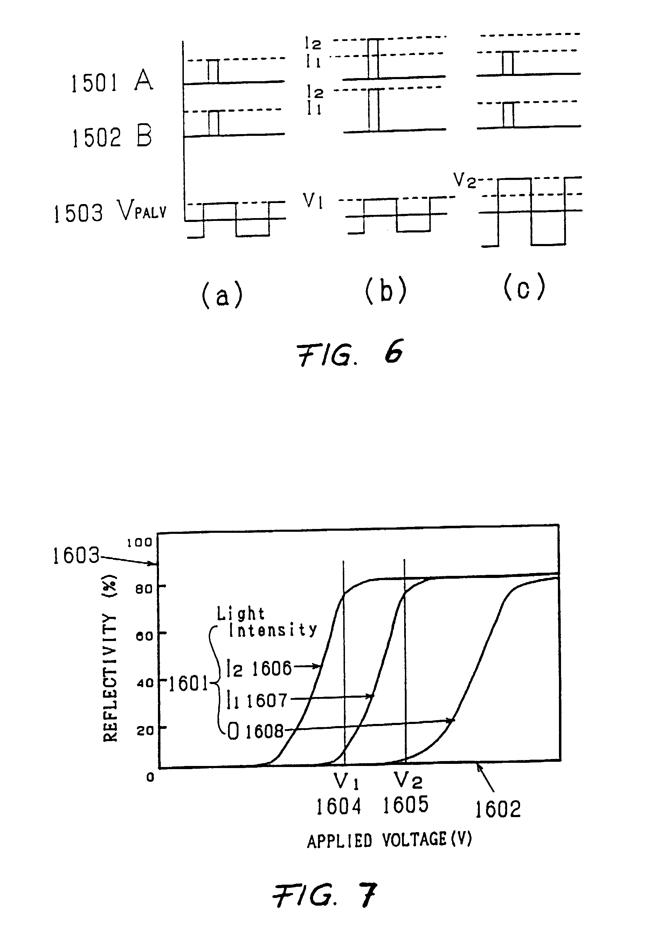

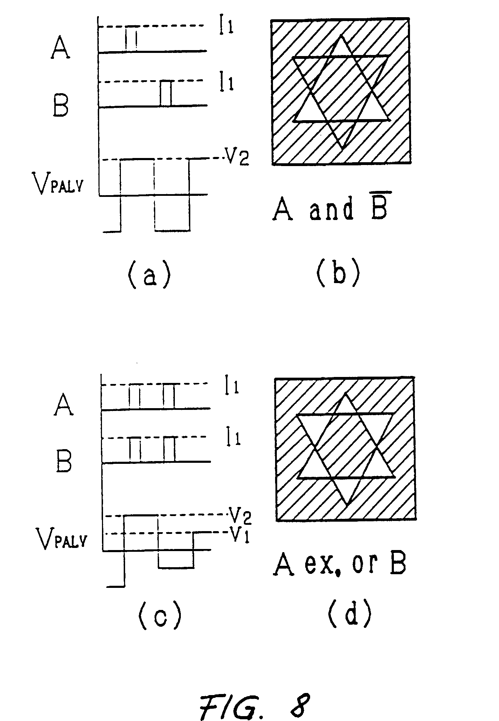

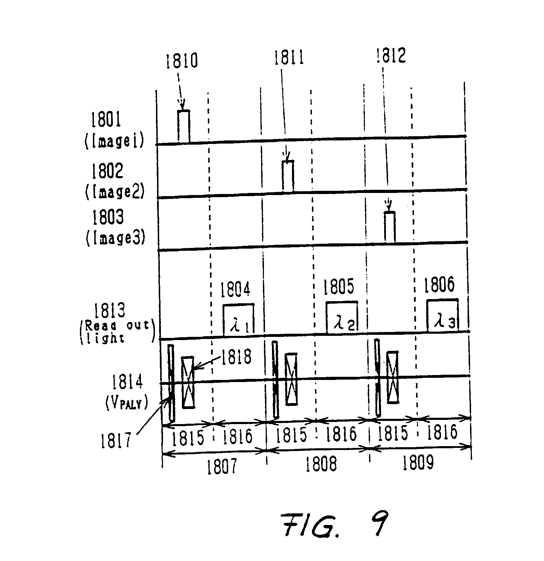

As depicted in Fig. 5, in accordance with one embodiment of the present invention a multiplicity of image inputs are simultaneously given, and the recording electric field signals are applied. At this time, it is possible to effect a logic operation of the two-dimensional image with respect to each image input. Fig. 5 shows an example of 2 input images, i.e., "A" 1401 and "B" 1402. For inputting and outputting the images to a PALV 1403, though not illustrated for simplicity in Fig. 5, the image forming optical system is usable. The numeral 1404 represents an output image in the case of an "OR" operation. The output image 1404 is written to all regions receiving the optical inputs. The numeral 1405 designates an output image in the case of an "AND" operation. Fig. 6 shows a driving method for executing the operation shown in Fig. 5. Referring to Fig. 6, intensities of the two input images of Fig. 5 are indicted by "A" 1501 and "B" 1502. The symbol V_{PALV} represents a driving signal applied to the PALV. Fig. 7 shows operational characteristics of the PALV. Fig. 7 also shows a relationship between a driving voltage 1602 and a reflectivity 1603 representing a relative output beam intensity of the PALV, wherein an input beam intensity 1601 is a parameter. The symbols I₁ 1606 and I₂ 1607 denote input beam intensities selected in this embodiment. The symbol 0 1608 indicates that the intensity is 0. Similarly, V₁ 1604 and V₂ 1605 designate selected driving voltages. It can be understood from Fig. 7, that the PALV has a threshold characteristic with respect to the driving voltage, and this threshold shifts depending on the input beam intensity. This characteristic is, it can be considered, derived from a threshold characteristic of an electro-optic effect. These threshold characteristics are combined to make practicable the logic operation shown in Fig. 5. Referring again to Fig. 7, when the driving voltage is set to the lower voltage side driving voltage V₁ 1604, the reflectivity can be controlled by the input beam intensity. This is no more than the "AND" operation by which the reflectivity is allowed to transit to a higher level only in the high intensity portion where the input beams are overlapped. Fig. 6(a) shows a driving method based on this operation. In this case, the input beam intensity is set at the level I₁ 1607, wherein the input beam intensity is not allowed to change the PALV state. Next, the input beam intensity is inputted after setting it at the higher level I₂ 1606 wherein the input beam intensity can change the PALV state. As a result, the "OR" operation can be effected, wherein the region to which any one of them is inputted becomes a transitable region. Fig. 6(b) shows this driving method. When the driving voltage is set at the higher level V₂ 1605, the threshold of input beam intensity decreases. Hence, even I₁ alone can cause a change, whereby the same "OR" operation can be executed. Fig. 6(c) illustrates an example of this driving method.

The PALV, having a storage ability, is capable of attaining an intricate two-dimensional image logic by sequentially performing the operations. Fig. 8 shows a simple example of the logic. Figs. 8(a) and 8(b) show a logic of "A AND (NOT B)". After writing an input "A" at a positive cycle, "B" is written at a negative cycle. In consequence of this step, a logic "AND" operation in association with "NOT B" is obtained. Figs. 8(c) and 8(d) show a case of an Exclusive OR (Ex. OR). The operation starts with writing "A OR B" by the method shown in Fig. 6(c). Next, the method of Fig. 6(a) is applied to the negative cycle, thereby writing a negation of "A AND B". They are the simplest logics. These logics are further multi-combined to obtain complicated logic operations.

V_{PALV} is herein modulated considering such a controllability that the PALV driving voltage has a quicker response. As illustrated in Fig. 7, however, the threshold characteristic is obtainable by either the driving voltage or the input beam intensity. Therefore, the same result is acquired even when modulating the input beam intensity.

A negative logic conceived as another significant logic is, as explained referring to Figs. 7(c) and 7(d), obtained simply by writing during the reversed polarity cycle. The negative logic is obtained further by a method of effecting polarizing rotations by a read optical system and by a polarization rotating element (e.g., a λ/2 plate and a twisted liquid crystal element, etc.)

The explanation of the erasing process is herein omitted for simplicity. The erasing process may be executed by the method described in Fig. 3 or by applying a high voltage pulse enough to cause a transition with no input beam, which is explained in the embodiment 1.

A dielectric mirror is provided in the recording device, preventing the read-out beam from influencing the photoconductive material, and it is therefore possible to read a recording status serving as output image information at any time. This separation or blocking mirror can be omitted. This process is practicable in such a manner that the read-out beam irradiation timing is not overlapped with the driving pulse, and it undergoes no influence by the read-out beam during the state transition. With this arrangement, a transmission read type recording device is attainable.

Besides, the erasing beam may also be eliminated. The reason for this is that the beam for reducing an impedance of the photoconductive material during the state transition is not necessarily required. For example, in a dark state, a pulse of an amplitude larger than the write pulse amplitude can be applied, whereby erasing can be done. Given to the photoconductive material is a structure having a commutating property in the dark state like a PIN structure. The SmC* liquid crystal is put into the erasing state S1 by the forward pulse. The erasing process can also be performed by this method. The image can be written by the same way as that in the case of the above-mentioned bipolarity.

The thus formed image can be transcribed on the photosensitive medium.

In tthe writing method explained above a two-dimensional image is projected onto the PALV. The logic between the incident beams is similarly practicable with the write beam image, i.e., a scanning type image input device. This is effective in a write process by use of, e.g., write beams having different diameters, in write processes in different beam scanning directions and in a logic between the two-dimensional image input beam and the scanning beam. In this case, an available beam scanning method may be a raster scan or a vector scan.

The embodiment described below concerns a case where this invention is applied to a color image forming device as an example of an image forming device.

As discussed above, an image is sequentially written by a pixel unit or a two-dimensional unit, whereby the PALV is capable of forming and erasing an image at a high speed as well as effecting partial erasing/writing processes thereof. It has been mentioned already that the PALV may used for a secondary image. In this embodiment, the color image forming device is put into practice by making a good use of this arrangement.

The following is a description of a principle of the color image forming device. A read-out beam wavelength is restricted to output image information which differs depending on the wavelength. The image information is recorded on the photosensitive medium. Note, that the basic configuration is the same as that of Fig. 1. The PALV has also the same construction as that explained above. Fig. 9 is a chart showing the operating principle of the color image forming device for recording three images on the photosensitive medium by using read-out beams having three different wavelengths or wavelength regions. A series of processes consists of operating processes 1807, 1808 and 1809 corresponding to the respective images. Each operating process is composed of a recording period 1815 with a corresponding one of wavelengths λ₁, λ₂ and λ₃, and an output period 1816 of the image beam. During the recording period 1815, as explained earlier, erasing is effected by an erasing pulse 1817. Subsequently, the image is recorded by synchronously applying a write pulse 1818 of V_{PALV} 1814 and an image input beam 1810. During the output period 1816, the PALV is irradiated with the read-out beam 1804, 1805 and 1806 corresponding to the images 1801, 1802 and 1803 respectively. The image beams having different wavelengths fall on the photosensitive medium. In this embodiment, the read-out beam involves the use of a halogen lamp beam traveling through a wavelength selecting filter. Three filters are changed over corresponding to the respective output periods. Fig. 9 shows a case where the three images are obtained in the three recording output sequences with the three wavelengths. The number of sequences is not limited to 3. For example, if the sensitivity of the photosensitive medium extends over the whole visible region, the images which differ according to red, green and blue are given to the PALV. The images are read by the method described above, and it follows that the photosensitive medium acquires full-color information. It is preferable that a spectrum outputted from the PALV at this time is set equally to a modulation spectrum possessed by the photosensitive medium. That is, a red PALV output beam is given for red coloring of the photosensitive medium. The reason for this is that the object body is illuminated with the light, and the write beam emerging from the object body can also be given to the photosensitive medium. When recording the images on the photosensitive medium through the PALV, however, the spectrum of the beam written to the PALV is not necessarily equalized to that of the PALV output beam. Namely, there is no problem if the spectrum of the image beam 1801 shown in Fig. 9 differs from that of the corresponding read-out beam 1804. Similarly, there is also no problem if that spectrum is different from a coloring spectrum of the photosensitive medium. Those spectra can be set independently.

When recording the image directly on a photosensitive medium having a low sensitivity, this requires a large power of illumination beams. Ordinary substances have diffusive characteristics of reflection. The larger power of illumination beams is also needed from this point of view. In the case of employing the PALV, the image beam coming from the object body is temporarily recorded on the PALV. It follows that the writing process can be effected long on the photosensitive medium with a small illumination light source. The PALV exhibits high sensitive photoelectric converting action with the aid of a photoconductive material. The PALV is therefore capable of writing with a beam of extremely faint light and reading the image with a beam having a high intensity. In other words, this utilizes image amplifying action by the PALV. Besides, the PALV is able to control an electric field. Hence, there can be added a function to control the foregoing inter-image process and the fluctuations in the write beam quantity as well.

Note that the erasing beam is not illustrated in Fig. 9. This is because the light for reducing the impedance of the photoconductive material is not necessarily needed during the state transition. In Fig. 9, a pulse of an amplitude larger than the write pulse amplitude is given in the dark state, and erasing is carried out. Given to the photoconductive material is a structure such as a PIN structure having a commutating property in the dark state. This may be attained by a method of bringing the SmC* liquid crystal in the erasing state S₁ with a forward pulse.

The image beams may be inputted to the PALV on the basis of the beam scanning or the two-dimensional image input. Besides, a inputting method utilizing a combination thereof is also usable.

## Claims

1. An image forming device, comprising
light valve means (120) having a photoconductive material (102), an electrooptic medium (101) and electrode means (103), said electrooptic medium being capable of assuming a first (S₁) or a second (S₂) optical state in response to a respective electric field applied thereto,
voltage applying means (106) for applying a voltage to said electrode means,
image input means (105) for projecting plural two-dimensional input images onto said photoconductive material, and
image reading means for reading an output image from said light valve means after said plurality of input images have been projected, the output image representing a combination of said input images,
**characterized in that**
said voltage applying means (106) comprises means for applying a pulse voltage to said electrode means (103) and means for selectively setting the amplitude of the pulse voltage to a first voltage level (V₁) or to a second voltage level (V₂) higher than the first one, and
said image input means (105) comprises means for projecting said input images simultaneously or sequentially in synchronism with the pulse voltage and means for selectively setting the light intensity of each input image to a first intensity (I₁) or to a second intensity (I₂) higher than the first one,
wherein said first and second voltage levels and said first and second intensities are predetermined such that
at said first voltage level (V₁) either the summed first intensities (I₁) of said plurality of input images, or the second intensity (l₂) of a single input image cause said electrooptic medium (101) to assume one of said first and second optical states (S₁, S₂), while
at said second voltage level (V₂) the first intensity (I₁) of a single input image causes said electrooptic medium (101) to assume one of said first and second optical states (S₁, S₂).

2. The device according to claim 1, wherein said electro-optic medium (101) is a ferro-electric liquid crystal, an oblique vapor deposition film (204) composed of an inorganic oxide being formed on a surface contiguous to said liquid crystal (201) of at least one of two substrates (202) sandwiching said ferro-electric liquid crystal therebetween.

3. The device according to claim 1 or 2, wherein said image reading means is an image output optical system for outputting the image onto a photosensitive medium (130).

4. The device according to claim 3, wherein said image output optical system is adapted to irradiate said photosensitive medium (130) selectively with one of a plurality of read-out light beams having different wavelengths or wavelength regions.

5. The device according to claim 3 or 4, wherein the spectrum of read-out light (108, 109) applied by said image output optical system (107) is different from the spectrum of the recording light (104) applied by said image input means (105).

## Patentansprüche

1. Bilderzeugungsvorrichtung, umfassend
eine Lichtventilanordnung (120) mit einem fotoleitenden Material (102), einem elektrooptischen Medium (101) und einer Elektrodenanordnung (103), wobei das elektrooptische Medium in der Lage ist, einen ersten (S₁) oder einen zweiten (S₂) optischen Zustand als Antwort auf ein an dieses angelegtes elektrisches Feld anzunehmen,
eine Spannungsanlegeanordnung (106) zum Anlegen einer Spannung an die Elektrodenanordnung,
eine Bildeingabeanordnung (105) zur Projektion mehrerer zweidimensionaler Eingangsbilder auf das fotoleitende Material, und
eine Bildleseanordnung zum Lesen eines Ausgangsbildes von der Lichtventilanordnung, nachdem die mehreren Eingangsbilder projiziert wurden, wobei das Ausgangsbild eine Kombination der Eingangsbilder darstellt,
**dadurch gekennzeichnet, daß**
die Spannungsanlegeanordnung (106) eine Einrichtung zum Anlegen einer Impulsspannung an die Elektrodenanordnung (103) und eine Einrichtung zum selektiven Einstellen der Amplitude der Impulsspannung auf einen ersten Spannungspegel (V₁) oder einen zweiten Spannungspegel, der höher als der erste ist, aufweist, und
die Bildeingabeanordnung (105) eine Einrichtung zur Projektion der Eingangsbilder gleichzeitig oder nacheinander synchron mit der Impulsspannung sowie eine Einrichtung zur wahlweisen Einstellung der Lichtintensität jedes Eingangsbildes auf eine erste Intensität (I₁) oder eine zweite Intensität (I₂), die höher ist als die erste, aufweist,
wobei der erste und der zweite Spannungspegel und die erste und die zweite Intensität derart sind, daß
bei dem ersten Spannungspegel (V₁) entweder die summierten ersten Intensitäten (I₁) der mehreren Eingangsbilder oder die zweite Intensität (l₂) eines einzelnen Eingangsbildes verursacht, daß das elektrooptische Medium (101) einen von dem ersten und dem zweiten optischen Zustand (S₁, S₂) annimmt, während
bei dem zweiten Spannungspegel (V₂) die erste Intensität (I₁) eines einzelnen Eingangsbildes bewirkt, daß das elektrooptische Medium (101) einen von dem ersten und dem zweiten optischen Zustand (S₁, S₂) annimmt.

2. Vorrichtung nach Anspruch 1, bei der das elektrooptische Medium (101) ein ferroelektrischer Flüssigkristall ist, wobei ein Schräg-Dampfabscheidungsfilm (204), der sich aus einem anorganischen Oxid zusammensetzt, auf einer Oberfläche angrenzend an den Flüssigkristall (201) wenigstens eines von zwei Substraten (202), die den ferroelektrischen Flüssigkristall zwischen sich einschließen, ausgebildet ist.

3. Vorrichtung nach Anspruch 1 oder 2, bei der die Bildleseanordnung ein optisches Bildausgabesystem zur Ausgabe des Bildes auf ein lichtempfindliches Medium (130) ist.

4. Vorrichtung nach Anspruch 3, bei dem das optische Bildausgabesystem in der Lage ist, das lichtempfindliche Medium (130) selektiv mit einem einer Mehrzahl von Ausleselichtstrahlen, die unterschiedliche Wellenlängen oder Wellenlängenbereiche aufweisen, zu bestrahlen.

5. Vorrichtung nach Anspruch 3 oder 4, bei der das Spektrum des Ausleselichts (108, 109), das von dem optischen Bildausgabesystem (107) angelegt wird, sich von dem Spektrum des Aufzeichnungslichts (104) unterscheidet, das von der Bildeingabeanordnung (105) angelegt wird.

## Revendications

1. Dispositif de formation d'images comportant
des moyens (120) formant valve de lumière ayant un matériau (102) photoconducteur, un milieu (101) électro-optique et des moyens (103) formant électrodes, le milieu électro-optique étant capable de prendre un premier (S₁) état optique ou un second (S₂) état optique en réponse à un champ électrique respectif qui lui est appliqué,
des moyens (106) d'application de tension destinés à appliquer une tension aux moyens formant électrodes,
des moyens (105) d'entrée d'images destinés à projeter plusieurs images d'entrée à deux dimensions sur le matériau photoconducteur, et
des moyens de lecture d'image destinés à lire une image de sortie issue des moyens formant valve de lumière après que la pluralité d'images d'entrée a été projetée, l'image de sortie représentant une combinaison des images d'entrée,
caractérisé en ce que
les moyens (106) d'application de tension comportent des moyens destinés à appliquer une tension d'impulsion aux moyens (103) formant électrodes et des moyens destinés à régler de manière sélective l'amplitude de la tension d'impulsion à un premier niveau (V₁) de tension ou à un second niveau (V₂) de tension supérieur au premier, et
les moyens (105) d'entrée d'image comportent des moyens destinés à projeter les images d'entrée de manière simultanée ou de manière séquentielle en synchronisation avec la tension d'impulsion et des moyens destinés à régler de manière sélective l'intensité lumineuse de chaque image d'entrée à une première intensité (I₁) ou à une seconde intensité (I₂) plus grande que la première,
dans lequel les premier et second niveaux de tension et les première et seconde intensités sont déterminés à l'avance de sorte que
au premier niveau (V₁) de tension, soit les premières intensités (I₁) sommées de la pluralité d'images d'entrée, soit la seconde intensité (I₂) d'une unique image d'entrée font que le milieu (101) électro-optique prend l'un des états parmi les premier et second états (S₁, S₂) optiques, tandis que
au second niveau (V₂) de tension, la première intensité (I₁) d'une image d'entrée unique fait que le milieu (101) électro-optique prend l'un des états parmi les premier et second états (S₁, S₂) optiques.

2. Dispositif suivant la revendication 1, dans lequel le milieu (101) électro-optique est un cristal liquide ferroélectrique, une pellicule (204) de dépôt de vapeur oblique constituée d'un oxyde non-organique étant formée sur une surface contiguë au cristal (201) liquide d'au moins l'un des deux substrats (202) entre lesquels est intercalé le cristal liquide ferroélectrique.

3. Dispositif suivant la revendication 1 ou 2, dans lequel les moyens de lecture d'image sont constitués d'un système optique de sortie d'image destiné à émettre en sortie l'image sur un milieu (130) photosensible.

4. Dispositif suivant la revendication 3, dans lequel le système optique de sortie d'image est adapté pour irradier sur le milieu (130) photosensible de manière sélective un parmi une pluralité de faisceaux de lumière d'extraction ayant différentes longueurs d'ondes ou différentes régions de longueurs d'ondes.

5. Dispositif suivant la revendication 3 ou 4, dans lequel le spectre de lumière (108, 109) extraite appliquée par le système (107) optique de sortie d'image est différent du spectre de la lumière (104) enregistrée appliquée par les moyens (105) d'entrée d'image.
